# EUROPEAN PATENT APPLICATION

(11) **EP 4 521 426 A1**
(43) Date of publication of application: **12.03.2025**
(21) Application number: 22965671.5
(22) Date of filing: 26.12.2022
(51) Int. Cl.: H01F 27/08, G05D 23/02, B60L 9/08

(54) **CONTROL CABINET OF TRACTION TRANSFORMER, AND RAIL TRAIN**

(30) Priority: 18.11.2022 CN 202211447096
(71) Applicant: CRRC Zhuzhou Electric Co., Ltd, Zhuzhou, Hunan 412000 (CN)
(72) Inventor: LONG, Guzong, Zhuzhou, Hunan 412000 (CN); HAO, Song, Zhuzhou, Hunan 412000 (CN); ZHAO, Kangfa, Zhuzhou, Hunan 412000 (CN); ZHAO, Yuan, Zhuzhou, Hunan 412000 (CN); WU, Wei, Zhuzhou, Hunan 412000 (CN); LI, Jie, Zhuzhou, Hunan 412000 (CN); CAI, Mingxing, Zhuzhou, Hunan 412000 (CN)
(74) Representative: Herrmann, Uwe
(86) International application number: PCT/CN2022/141956
(87) International publication number: WO 2024/103495

(57) **Abstract**

A control cabinet of a traction transformer, and a rail train, relating to the technical field of rail transit vehicles. The control cabinet of a traction transformer comprises a detachable housing and a control module provided inside the detachable housing; the control module is used for determining the fan frequency of a fan in a cooling system of a traction transformer according to first acquired data sent by a vehicle control unit of a rail train and second acquired data sent by the traction transformer, so as to perform frequency conversion control on the fan by using the fan frequency; the first acquired signal comprises train speed data; and the second acquired signal comprises oil temperature data. According to the present invention, by providing a control cabinet of a traction transformer, a control module in the control cabinet of a traction transformer is used for performing frequency conversion control on a cooling fan according to data such as train speed and oil temperature of the traction transformer, thus reducing noise and making the traction transformer intelligent. Rail train noise is effectively reduced, and passenger comfort improved.

## Description

The present application claims priority to Chinese Patent Application No.202211447096.7, titled "CONTROL CABINET OF TRACTION TRANSFORMER, AND RAIL TRAIN", filed on November 18, 2022 with the China National Intellectual Property Administration, which is incorporated herein by reference in its entirety.

### FIELD

The present disclosure relates to the technical field of rail transit vehicles, and in particular to a control cabinet for a traction transformer, and a rail train.

### BACKGROUND

A traction transformer of a rail transit vehicle is arranged at a train, for converting the high voltage electricity with a voltage of 25kV of the overhead contact system into various low voltage electricity required by the traction system and auxiliary system. The traction transformer is a power transformer with a special voltage level, meets a requirement of drastic changes in traction load, suppresses harmonic current and limits short-circuit current, ensuring the safe, stable and reliable operation of the electric transmission system of the train. The traction transformer serves as a power source of a rail vehicle and as a core and critical component of a traction system.

In the conventional technology, the traction transformer of a rail train generally adopts a cooling manner of forced ventilation by a cooling fan. The cooling fan performs pole-changing control in switching between two-pole and four-pole. For example, the cooling fan operates at a low speed (such as at a frequency of 25Hz) in a case that the oil temperature of the traction transformer is low and train speed is low. The cooling fan operates at a high speed (such as at a frequency of 50Hz) in a case that the oil temperature is high or the train speed is high, resulting in loud noise of the whole vehicle.

With rapid development of rail transit and the increasing demand for riding comfort for passengers, attention is drawn to how to address the issues of effectively reducing noise of the rail train and improving comfort for passengers.

### SUMMARY

The objective of the present disclosure is to provide a control cabinet for a traction transformer and a rail train, to reduce noise of a rail train and improve the comfort for passengers.

To solve the above technical problem, a control cabinet for a traction transformer is provided according to the present disclosure. The control cabinet for the traction transformer includes a detachable housing and a control module arranged inside the detachable housing.

The control module is configured to determine a fan frequency of a fan in a cooling system of the traction transformer based on first collected data sent by a vehicle controller of a rail train and second collected data sent by the traction transformer, to perform frequency conversion control on the fan based on the fan frequency. The first collected signal includes train speed data, and the second collected signal includes oil temperature data

In an embodiment, the control module is connected to the vehicle controller via Ethernet.

In an embodiment, an Ethernet plug, a transformer connection plug and a power plug of the control cabinet are arranged at an outer side of the detachable housing.

The vehicle controller is connected to the control module via the Ethernet plug and is configured to send the first collected data to the control module via Ethernet. The traction transformer is connected to the control module via the transformer connection plug and is configured to send the second collected data to the control module. The rail train supplies power to the control module via the power plug of the control cabinet.

In an embodiment, the detachable housing includes a cabinet body and a cabinet cover, and the cabinet cover is detachably connected to the cabinet body.

In an embodiment, the cabinet cover is arranged on the top of the cabinet body, and a handle component is arranged at an outer side of a sidewall of the cabinet body.

In an embodiment, the control cabinet for the traction transformer further includes a frequency conversion module arranged inside the detachable housing.

The rail train supplies power to the fan via the frequency conversion module. The frequency conversion module is configured to regulate a power supply outputted to the fan based on a received frequency-conversion control signal corresponding to the fan frequency to implement the frequency conversion control of the fan.

In an embodiment, the frequency conversion module is further configured to regulate the power supply outputted to the fan based on the frequency-conversion control signal sent by the control module.

In an embodiment, the frequency conversion module is further configured to regulate the power supply outputted to the fan based on the frequency-conversion control signal sent by the vehicle controller.

In an embodiment, a power supply input plug of the fan and a power supply output plug of the fan are arranged at the outer side of the detachable housing.

The rail train is connected to the frequency conversion module via the power supply input plug of the fan to supply power to the fan via the frequency conversion module. The fan is connected to the frequency conversion module via the power supply output plug of the fan and is configured to regulate a rotation speed of the fan based on the power supply outputted by the frequency conversion module.

In addition, a rail train is provided according to the present disclosure. The rail train includes the control cabinet for the traction transformer described above.

The control cabinet for the traction transformer provided according to the present disclosure includes a detachable housing and a control module arranged inside the detachable housing. The control module is configured to determine a fan frequency of a fan in a cooling system of the traction transformer based on first collected data sent by a vehicle controller of a rail train and second collected data sent by the traction transformer, to perform frequency conversion control on the fan based on the fan frequency. The first collected signal includes train speed data, and the second collected signal includes oil temperature data.

It can be seen that, with the control cabinet for the traction transformer provided according to the present disclosure, the control module in the control cabinet for the traction transformer performs frequency conversion control on the cooling fan based on the data such as the train speed and the oil temperature of the traction transformer, achieving low noise and intelligent of the traction transformer, effectively reducing the noise of the rail train and improving the comfort for passengers. In addition, the rail train is provided according to the present disclosure, which has the same beneficial effects.

### BRIEF DESCRIPTION OF THE DRAWINGS

In order to clearly illustrate technical solutions in the embodiments of the present disclosure or in the conventional technology, the drawings used in the description of the embodiments or the conventional technology are briefly described below. It is apparent that the drawings in the following description show only embodiments of the present disclosure, and other drawings may be obtained by those skilled in the art based on the drawings without any creative efforts.
FIG. 1 is a structural block diagram of a control cabinet for a traction transformer according an embodiment of the present disclosure;
FIG. 2 is an external view of a control cabinet for a traction transformer according another embodiment of the present disclosure; and
FIG. 3 is a schematic structural diagram of a control cabinet for a traction transformer according another embodiment of the present disclosure.

### DETAILED DESCRIPTION

In order to make the above objectives, the technical solutions and advantages of the embodiments of the present disclosure more clear, the technical solutions in the embodiments of the present disclosure are described clearly and completely below in conjunction with the drawings in the embodiments of the present disclosure. It is apparent that the embodiments described below are only some embodiments of the present disclosure, rather than all the embodiments. All other embodiments obtained by those skilled in the art based on the embodiments in the present disclosure without any creative work fall within the protection scope of the present disclosure.

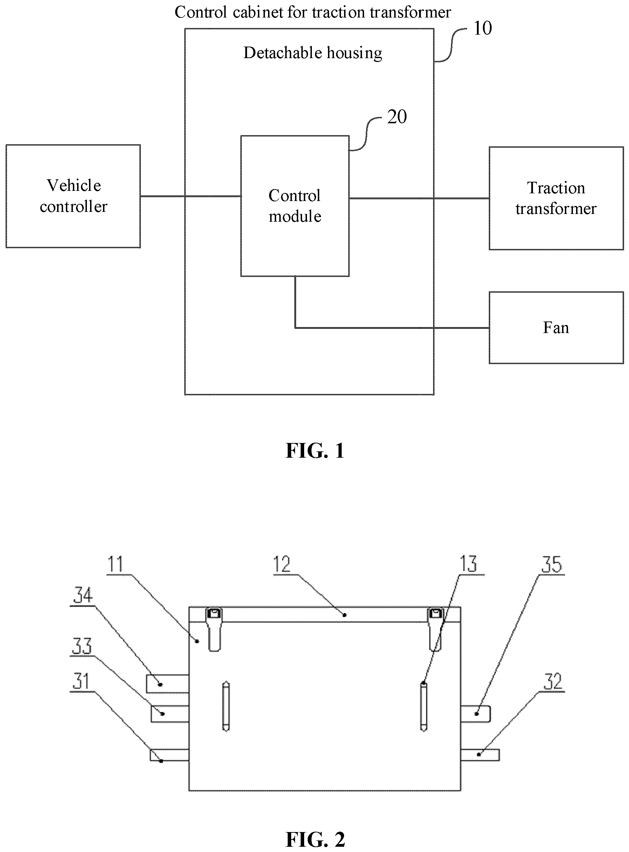

Reference is made to FIG. 1, which is a structural block diagram of a control cabinet for a traction transformer according to an embodiment of the present disclosure. The control cabinet for the traction transformer includes a detachable housing 10 and a control module 20 arranged inside the detachable housing 10.

The control module 20 is configured to determine a fan frequency of a fan in a cooling system of the traction transformer based on first collected data sent by a vehicle controller of a rail train and second collected data sent by the traction transformer, to perform frequency conversion control on the fan based on the fan frequency. The first collected signal includes train speed data, and the second collected signal includes oil temperature data.

It can be understood that the detachable housing 10 in this embodiment may be a housing of the control cabinet (or referred to as an intelligent cabinet) of the traction transformer that is detachable and openable. Therefore, in a case of maintaining and inspecting components inside the detachable housing 10 (such as the control module 20), the personnel can conveniently open the detachable housing 10 to inspect components inside, and close to recover the detachable housing 10 when completing the maintenance and inspection.

In an embodiment, the specific structure of the detachable housing 10 in the embodiment may be determined by the designer according to practical scenarios and user requirements. As shown in FIG. 2, the detachable housing 10 includes a cabinet body 11 and a cabinet cover 12. The cabinet cover 12 is detachably connected to the cabinet body 11. That is, the cabinet cover 12 serves as a detachable part of the detachable housing 10. The personnel detach the cabinet cover 12 to maintain and inspect the components (such as the control module 20) inside the cabinet body 11 during the maintenance and inspection. The specific structure of the detachable housing 10 is not limited by the embodiments, as long as the detachable housing 10 can be detached and opened.

In an embodiment, to facilitate detaching the detachable housing 10, the detachable housing 10 is provided with a handle component. As shown in FIG. 2, in a case that the cabinet cover 12 is arranged on the top of the cabinet body 11, the handle component 13 is arranged at the outer side of the sidewall of the cabinet body, enabling detaching the cabinet cover 12 by the personnel via the handle component 13.

It should be noted that the control module 20 in the embodiment may be a control component inside the control cabinet for the traction transformer, such as a processor. The first collected data in the embodiment may be collected and sent by a vehicle side of a rail train and related to the change of the fan frequency, such as train speed data. The second collected data is collected and sent by the traction transformer and related to the change of the fan frequency, such as oil temperature data of the traction transformer. The control module 20 in this embodiment determines the fan frequency of the fan in the cooling system of the traction transformer based on the first collected data sent by the vehicle controller of the rail train and the second collected data sent by the traction transformer, so as to perform frequency conversion control on the fan based on the fan frequency.

In an embodiment, a manner in which the control module 20 determines the fan frequency of the fan in the cooling system of the traction transformer based on the first collected data sent by the vehicle controller of the rail train and the second collected data sent by the traction transformer may be set by the designer. For example, it may be implemented by using the same or similar manner of the frequency-conversion control method according to the conventional technology. For example, the control module 20 calculates to determine the fan frequency based on the train speed data and the oil temperature data. Therefore, the fan frequency increases as the oil temperature data increases in a case that the train speed data remains unchanged. The fan frequency increases as the train speed data increases in a case that the oil temperature data remains unchanged. The specific manner is not limited in the embodiment, as long as the control module 20 determines the fan frequency of the fan and implements stepless speed regulation of the fan based on the first collected data and the second collected data.

The control module 20 inside the detachable housing 10 in the embodiment is connected to the vehicle controller via Ethernet. As shown in FIG. 2, an Ethernet plug 31, a transformer connection plug 32 and a power plug 33 of the control cabinet are arranged at the outer side of the detachable housing 10. The vehicle controller is connected to the control module 20 via the Ethernet plug 31, and is configured to send the first collected data to the control module 20 via Ethernet. The traction transformer is connected to the control module 20 via the transformer connection plug 32, and is configured to send the second collected data to the control module 20. The rail train supplies power to the control module 20 via the power plug 33 of the control cabinet. That is, a corresponding power supply end of the rail train is connected to the power plug 33 of the control cabinet to supply power to the control module 20 inside the detachable housing 10.

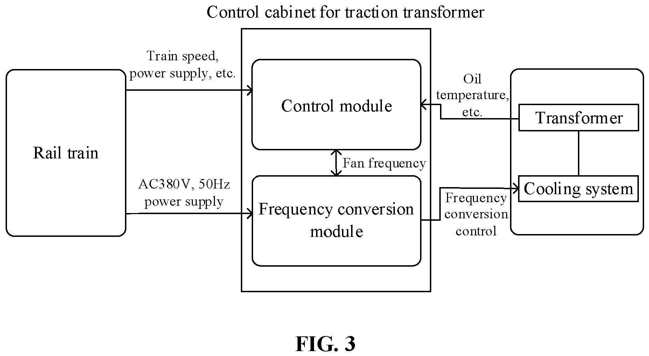

Further, the control cabinet for the traction transformer provided in the embodiment further includes a frequency conversion module (such as a frequency converter) arranged inside the detachable housing 10. The rail train supplies power to the fan via the frequency conversion module. The frequency conversion module is configured to regulate the power supply outputted to the fan based on a received frequency-conversion control signal corresponding to the fan frequency, so as to implement frequency conversion control of the fan. That is, the frequency conversion module inside the detachable housing 10 regulates the power supply (an AC380V, 50Hz power supply shown in FIG. 3) of the fan from the rail train to power supply of the fan from a power supply corresponding to the fan frequency, so as to implement frequency conversion control of the fan.

The control module may perform frequency conversion control on the fan based on the fan frequency via the frequency conversion module inside the control cabinet for the traction transformer, to implement the stepless speed regulation of the fan. The specific manner in which the control module 20 inside the detachable housing 10 in the embodiment perform frequency conversion control on the fan based on the fan frequency may be set by the designer according to practical scenarios and user requirements. For example, the control module 20 sends a frequency-conversion control signal corresponding to the fan frequency to the frequency conversion module, to cause the frequency conversion module to regulate the power supply outputted to the fan based on the frequency-conversion control signal sent by the control module 20. If the fan is controlled by the vehicle controller, the control module 20 sends the determined fan frequency to the vehicle controller, causing the vehicle controller to send the frequency-conversion control signal corresponding to the fan frequency to the frequency conversion module, and causing the frequency conversion module to regulate the power supply outputted to the fan based on the frequency-conversion control signal sent by the vehicle controller.

In an embodiment, as shown in FIG. 2, a power supply input plug 34 of the fan and a power supply output plug 35 of the fan are arranged at the outer side of the detachable housing 10. The rail train is connected to the frequency conversion module via the power supply input plug 34 of the fan, and is configured to supply power to the fan via the frequency conversion module. The fan is connected to the frequency conversion module via the power supply output plug 35 of the fan, and is configured to regulate the rotation speed of the fan based on the power supply outputted by the frequency conversion module. That is, the corresponding power supply end in the rail train is connected to the power supply input plug 34 of the fan to supply power to fan via the frequency conversion module.

The rail train switches to a hard-wired direct connection to supply power to the fan in a case that the control cabinet for the traction transformer malfunctions, for example, the control module 20 malfunctions. The frequency conversion module is further configured to directly conduct the internal connection between the power supply input plug of the fan and the power supply output plug of the fan, so as to switch to the hard-wired direct connection between the corresponding power supply end in the rail train and the fan, in a case that the control module 20 malfunctions, for example, the frequency-conversion control signal sent by the control module 20 fails to be received. Alternately, the vehicle controller disconnects the connection between the corresponding power supply end in the rail train and the power supply input plug 34 of the fan, and switches the line connection between the corresponding power supply end in the rail train and the fan to the hard-wired direct connection between the corresponding power supply end in the rail train and the fan, in a case that the control cabinet for the traction transformer malfunctions.

According to the embodiments of the present disclosure, the control cabinet for the traction transformer is provided. The control module 20 in the control cabinet for the traction transformer performs frequency conversion control on the cooling fan based on the data such as the train speed and the oil temperature of the traction transformer, achieving low noise and intelligent of the traction transformer, effectively reducing the noise of the rail train and improving the comfort for passengers.

A rail train is further provided according to an embodiment of the present disclosure, corresponding to the embodiments of the control cabinet for the traction transformer. The rail train described below and the control cabinet for the traction transformer described above can be referred to each other.

The rail train includes the control cabinet for the traction transformer provided in the above embodiments.

The embodiments in the specification are described in a progressive manner. Each of the embodiments mainly focuses on differences from other embodiments, and references can be made to each other for the same or similar parts among the embodiments. Since the rail train disclosed in the embodiments corresponds to the control cabinet for the traction transformer disclosed in the embodiments, the description is relatively simple, and reference may be made to descriptions in the method embodiments for the relevant parts.

The control cabinet for a traction transformer and the rail train provided according to the present disclosure are introduced in detail above. The principle and implementation of the present disclosure are illustrated by using specific embodiments herein. The above descriptions of the embodiments are only used to facilitate understanding of the method and the core idea of the present disclosure. It should be noted that, several improvements and modifications may be made by those skilled in the art to the present disclosure without departing from the principle of the present disclosure, and these improvements and modifications also fall within the protection scope of the claims of the present disclosure.

## Claims

1. A control cabinet for a traction transformer, comprising:
a detachable housing; and
a control module, arranged inside the detachable housing, wherein
the control module is configured to determine a fan frequency of a fan in a cooling system of the traction transformer based on first collected data sent by a vehicle controller of a rail train and second collected data sent by the traction transformer, to perform frequency conversion control on the fan based on the fan frequency, wherein the first collected signal comprises train speed data, and the second collected signal comprises oil temperature data.

2. The control cabinet for the traction transformer according to claim 1, wherein
the control module is connected to the vehicle controller via Ethernet.

3. The control cabinet for the traction transformer according to claim 2, wherein an Ethernet plug, a transformer connection plug and a power plug of the control cabinet are arranged at an outer side of the detachable housing;
wherein the vehicle controller is connected to the control module via the Ethernet plug and is configured to send the first collected data to the control module via Ethernet;
wherein the traction transformer is connected to the control module via the transformer connection plug and is configured to send the second collected data to the control module; and
wherein the rail train supplies power to the control module via the power plug of the control cabinet.

4. The control cabinet for the traction transformer according to claim 1, wherein the detachable housing comprises a cabinet body and a cabinet cover, and the cabinet cover is detachably connected to the cabinet body.

5. The control cabinet for the traction transformer according to claim 4, wherein the cabinet cover is arranged on the top of the cabinet body, and a handle component is arranged at an outer side of a sidewall of the cabinet body.

6. The control cabinet for the traction transformer according to claims 1 to 5, further comprising a frequency conversion module arranged inside the detachable housing, wherein
the rail train supplies power to the fan via the frequency conversion module; and
the frequency conversion module is configured to regulate a power supply outputted to the fan based on a received frequency-conversion control signal corresponding to the fan frequency to implement the frequency conversion control of the fan.

7. The control cabinet for the traction transformer according to claim 6, wherein the frequency conversion module is further configured to regulate the power supply outputted to the fan based on the frequency-conversion control signal sent by the control module.

8. The control cabinet for the traction transformer according to claim 6, wherein the frequency conversion module is further configured to regulate the power supply outputted to the fan based on the frequency-conversion control signal sent by the vehicle controller.

9. The control cabinet for the traction transformer according to claim 6, wherein a power supply input plug of the fan and a power supply output plug of the fan are arranged at the outer side of the detachable housing,
the rail train is connected to the frequency conversion module via the power supply input plug of the fan to supply power to the fan via the frequency conversion module; and the fan is connected to the frequency conversion module via the power supply output plug of the fan and is configured to regulate a rotation speed of the fan based on the power supply outputted by the frequency conversion module.

10. A rail train, comprising the control cabinet for the traction transformer according to any one of claims 1 to 9.
